# EUROPEAN PATENT APPLICATION

(11) **EP 1 435 279 A1**
(43) Date of publication of application: **07.07.2004**
(21) Application number: 04250015.7
(22) Date of filing: 05.01.2004
(51) Int. Cl.: B25B 29/02, B25B 23/08, B25B 23/10, F16B 37/00, F16B 43/00, B25B 21/00

(54) **A fastening device with a nut, a bolt and a washer**

(30) Priority: 06.01.2003 US 337170
(71) Applicant: Unex Corporation, Mahwah, New Jersey 07430 (US)
(72) Inventor: Kjellberg, Carl, Mahwah, NJ 07430 (US)
(74) Representative: Hanson, William Bennett

(57) **Abstract**

A nut (1') arranged on a bolt (2) has a first portion (4) spaced in an axial direction from a washer (3) and having a polygonal outer surface, and a second portion (5) located between the first portion and the washer (3) and having a transverse dimension (d) which is smaller than a transverse dimension of the polygonal surface of the first portion (4) of the nut (1'). A holding element (6) engages with the washer (3) so as to hold the washer and to prevent it from turning, and a driving element (7) engages with the polygonal surface of the nut (1') and turns the nut.

## Description

The present invention relates to a nut, a fastener provided with a nut, and a fastening device therefor.

In order to tighten the fastener, a holding element of a tightening tool can hold the washer engaged with the bolt to prevent turning of the washer, while the turning element of the tool turns the nut. This is disclosed for example EP-A-1318316. In this construction it is not possible to use a regular hexagonal nut, since the washer is of the same size and it would therefore be impossible to place the driving element, formed as an inner socket, on the nut and the holding element, formed as an outer socket, on the washer. This is because the outer socket could not be taken off when the nut is tight simply since the hexagonal surface of the nut might not be aligned with the hexagonal surface of the washer. It is not desirable to increase the transverse cross-section of the hexagonal surface of the washer because side-clearance problems can be encountered due to the larger diameter of the holding element formed as the outer socket.

Accordingly, it is an aim of the present invention to provide a nut, a fastener provided with a nut, and a fastening device therefor, which avoid the disadvantages of the prior art.

In keeping with this aim and with others which will become apparent hereinafter, the present invention provides.a nut for a fastener according to claim 1, a fastener according to claim 3 and a fastening device according to claim 5. Preferred or optional features of the invention are defined in the dependent claims.

When the inventive solution is proposed, a regular polygonal or hexagonal nut can be used to be placed on the washer with the same size of polygonal surface, except that the bottom part of the polygonal nut has a smaller transverse cross-section, and preferably is rounded off. When a polygonal socket which forms the turning element is loose inside of another polygonal socket which forms the holding element of a larger diameter and the outer socket has a height smaller than the height of the second portion of the nut, the outer socket first slips over the first polygonal portion of the nut and then can be rotated to slip on the polygonal surface of the washer, while the inner socket engages the polygonal surface of the nut.

The invention, both as to its construction and its method of operation, together with additional objects and advantages thereof, will be best understood from the following description of specific embodiments, given by way of example only, when read in connection with the accompanying drawings, in which:
Figure 1 is a view showing a known fastener with a bolt, a nut, and also a washer engaging the bolt to prevent their rotation relative to one another;
Figure 2 is a view showing a fastener with a new nut in accordance with the present invention;
Figure 3 is a view showing a fastening device with the fastener of Figure 2;
Figure 4 is a bottom view of a holding element of the fastening device of Figure 3; and

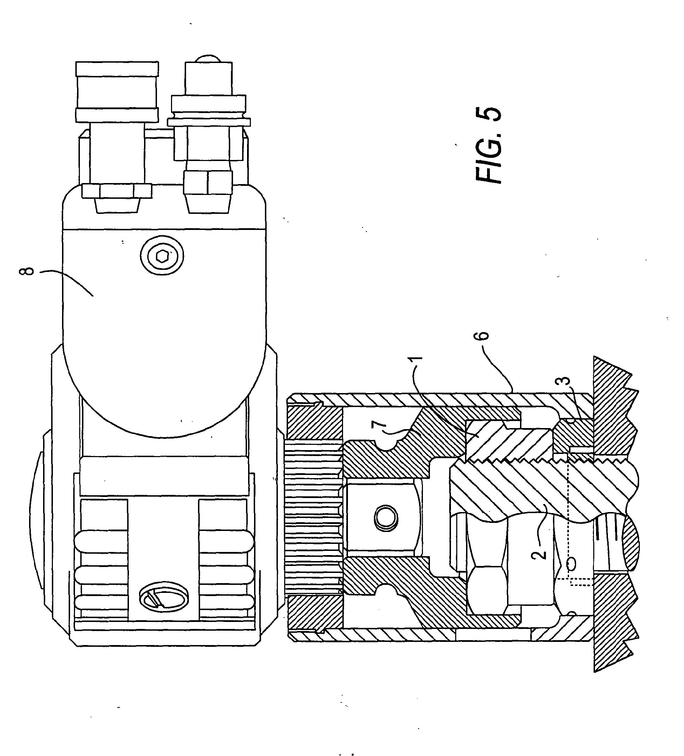

Figure 5 is a view substantially corresponding to the view of Figure 3 but showing the position of the fastening device in which the nut and the washer are engaged correspondingly by a driving element and a holding element of a power tool.

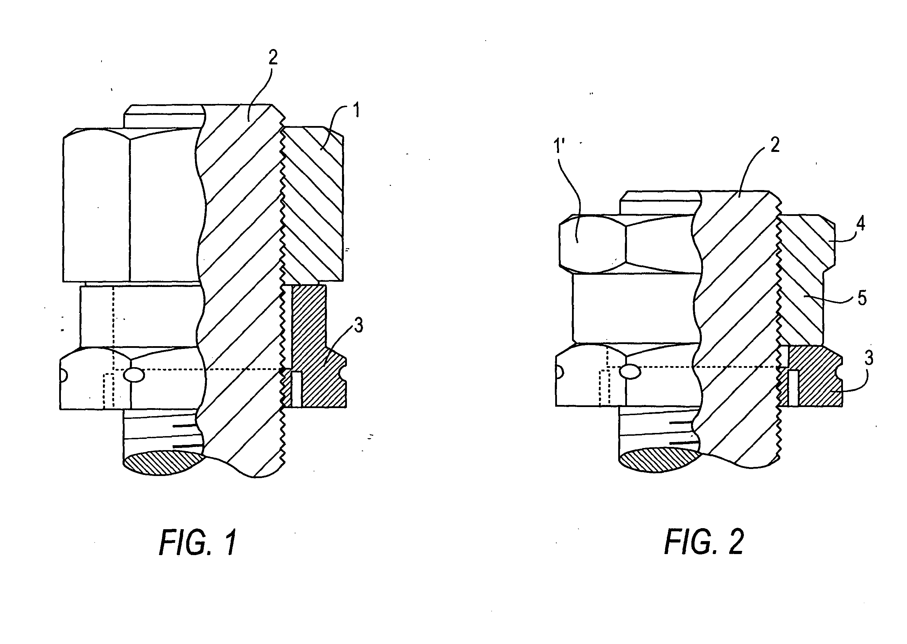

Figure 1 shows a known fastener which includes a nut 1, a bolt 2, and a washer 3, The nut 1 is formed as a polygonal nut, for example a hexagonal nut, a point nut, etc., and is screwed on the bolt 2 provided with an outer thread. The washer 3 is adapted to be located between the nut 1 and an object composed for example of two parts to be connected with one another, in which object the bolt 2 is introduced, The washer 3 is connected with the bolt 2 so that the bolt 2 can not rotate relative to the washer 3, but can move axially relative to the latter. For example, an inner surface of a part of the washer 3 can be provided with a thread engageable with the thread of the bolt 2, as disclosed in EP-A-1318316.

As shown in Figure 2, a fastener in accordance with the present invention also includes a nut 1', a bolt 2, and a washer 3. The nut however is formed in a different way, The nut 1' includes a first portion which is identified with reference numeral 4 and is spaced from the washer 3 as considered in an axial direction, and a second portion which is identified with reference numeral 5 and is located between the first nut portion 4 and the washer 3. The first nut portion 4 has a polygonal outer surface, for example a hexagonal surface, a twelve point surface, etc. The second nut portion 5 has a transverse dimension which is smaller than the transverse dimension of the first nut portion 4. Preferably, the second nut portion 5 is round.

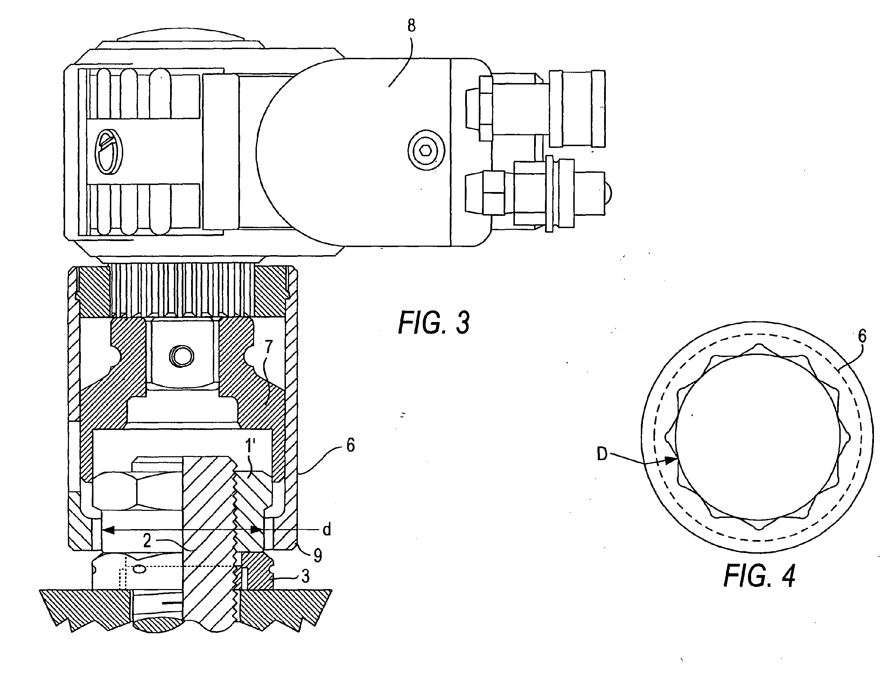

Figure 3 shows a fastening device in accordance with the present invention. The fastening device includes a fastener comprising the nut 1', the bolt 2 and the washer 3 shown in Figure 2, and also tightening means. The tightening means include an outer holding element 6 and an inner driving element 7. The inner driving element 7 is connectable to a turning element of a torque tool 8, for example to a ratchet of a ratchet-lever mechanism of the torque tool 8. The outer holding element 6 is connectable through a splined adaptor to a housing of the torque tool 8 to transmit a reaction torque from the holding element 6 to the housing of the torque tool. The outer holding element 6 has a holding portion which is identified by reference numeral 9 and adapted to engage the outer polygonal surface of the washer 3. The height of the holding portion 9 of the holding element 6 in an axial direction is smaller than the height of the second nut portion 5. The outer transverse dimension of the second nut portion 5, for example its outer diameter d, is smaller than an inner transverse dimension or an inner diameter D of the holding portion 9 of the outer holding element 6, as shown in Figure 4.

In operation, the washer 3 is connected with the bolt 2 and the bolt 2 is introduced into an object composed for example of two parts to be connected with one another, and the nut 4 is screwed on the bolt. Then a power tool 8 is applied to the thusly formed fastener so that its inner driving element 7 engages the outer polygonal surface of the nut 1', and its outer holding element 6 first slips over the outer polygonal surface of the nut 1' and then its holding portion 9 can be rotated to slip onto the hexagonal outer surface of the washer 3. The inner driving element 7 is then rotated while the outer holding element 6 holds on the washer, so that the nut 1' is tightened on the bolt 2.

It will be understood that each of the elements described above, or two or more together, may also find a useful application in other types of constructions differing from the types described above.

While the invention has been illustrated and described as embodied in a nut, a fastener provided with a nut, and a fastening device therefor, it is not intended to be limited to the details shown, since modifications and structural changes may be made without departing in any way from the scope of the present invention as defined by the appended claims.

## Claims

1. A nut (1') for a fastener including a bolt (2); a nut (1') threadingly engaging with the bolt, and a polygonal washer (3) adapted to be located between the nut (1') and an object in which the bolt (2) is introducible and engaged with said bolt so that the bolt (2) is non rotatable relative to the washer (3) but axially displaceable relative to the washer, said washer (3) having a polygonal circumferential surface, **characterised in that** said nut (1') has a first portion (4) spaced in an axial direction from said washer (3) and having a polygonal outer surface, and a second portion (5) adapted to be located between the first portion (4) and said washer (3) and having a transverse dimension (d) which is smaller than a transverse dimension of said polygonal surface of said first portion (4) of said nut (1').

2. A nut as defined in claim 1, wherein said second portion (5) of said nut (1') has a circular cross-section.

3. A fastener, comprising a bolt (2); a nut (1') threadingly engaging with said bolt; a washer (3) adapted to be located between said nut (1') and an object in which said bolt (2) is introducible and engaged with said bolt so that said bolt (2) is non rotatable relative to said washer (3) but axially displaceable relative to said washer, **characterised in that** said nut (1') has a first portion (4) spaced in an axial direction from said washer (3) and having a polygonal outer surface, and a second portion (5) located between said first portion (4) and said washer (3) and having a transverse dimension (d) which is smaller than a transverse dimension of said polygonal surface of said first portion (4) of said nut (5').

4. A fastener as defined in claim 3, wherein said second portion (5) of said nut (1') has a circular cross-section.

5. A fastening device, comprising a fastener including a bolt (2), a nut (1') threadingly engaging with said bolt, a polygonal washer (3) adapted to be located between said nut (1') and an object in which said bolt (2) is introducible and engaged with said bolt so that said bolt (2) is non rotatable relative to said washer (3) but axially displaceable relative to said washer, **characterised in that** said nut has a first portion (4) spaced in an axial direction from said washer (3) and having a polygonal outer surface, and a second portion (5) located between said first portion (4) and said washer (3) and having a transverse dimension (d) which is smaller than a transverse dimension of said polygonal surface of said first portion (4) of said nut (1'); and tightening means including a holding element (6) engageable with said washer (3) so as to hold said washer and to prevent it from turning, and a driving element (7) adapted to engage with said polygonal surface of said nut (1') and to turn said nut.

6. A fastening device as defined in claim 5, wherein said second portion (5) of said nut (1') has a circular cross-section.

7. A fastening device as defined in claim 5 or 6, wherein said holding element (6) has a holding portion (9) with an axial height which is smaller than an axial height of said second portion (5) of said nut (1').
